# EUROPEAN PATENT SPECIFICATION

(11) **EP 1 122 821 B1**
(45) Date of publication and mention of the grant of the patent: **26.08.2009**
(21) Application number: 01101693.8
(22) Date of filing: 30.01.2001
(51) Int. Cl.: H01R 9/24, H04Q 1/14

(54) **Telecommunications overvoltage protection magazine and distribution point**
Telekommunikations-Überspannungsschutzmagazin und eine Verteilungsstelle
Magasin de protection contre la surtension de télécommunications et un point de distribution

(30) Priority: 01.02.2000 DE 20001752 U
(43) Date of publication of application: 08.08.2001
(73) Proprietor: 3M Innovative Properties Company, St. Paul MN 55133-3427 (US)
(72) Inventor: Burmeister, Klaus-Dieter, 42111 Wuppertal (DE); Denter, Friedhelm, 44575 Castrop-Rauxel (DE); Edelmann, Wolfgang, 42111 Wuppertal (DE); Gaertner, Norbert, 42285 Wuppertal (DE); Otto, Hans-Dieter, 51688 Wipperfürth (DE)
(74) Representative: HOFFMANN EITLE

(56) References cited:
- WO-A-99/36987
- CH-A- 679 715
- GB-A- 2 337 872
- US-A- 5 779 504

## Description

### Technical Field

The invention relates to a telecommunications overvoltage protection magazine.

It is in this field for connecting lines leading to individual subscribers to lines leading to the exchange system that junction modules mostly in the form of junction blocks are usually provided. In this arrangement the so-called line side from which the lines lead to individual subscribers and the so-called backbone side from which the lines lead to the exchange system may be separated from each other. A flexible connection between the junction blocks on both sides and thus in connecting each subscriber to the exchange system is made, for example, via patching lines.

### Prior art

It is a popular concept to configure the junction blocks with two rows of contacts in parallel for terminating each of the lines to be connected to each other. As an alternative so-called cable connectors are known from prior art in which several lines are bundled and which as a completely prefabricated connector is usually plugged into the rear side of a junction block, as a result of which only one side of the junction block needs to be componented with the lines to connect these lines to the lines terminated via the cable connector in the junction block.

To protect the items of equipment downstream of the junction blocks concerned from overvoltages it is furthermore known in the cited field to mount protective connectors or overvoltage protection magazines on the junction blocks, as a result of which all electrical and electronic items of equipment connected downstream of the junction block have overvoltage protection.

Each of the systems as described above forms a tailor-made concept for a specific application within which the individual components are adapted to each other.

WO 99/36987 A is related to a telephone connecting strip intended to be mounted on a U-shaped metal support and formed by a lower base for connecting pairs of switching equipment, a mechanical module mounted on the lower base and provided with protection means and an electronic module having a lateral connector traversed by a bus.

### Summary of the Invention

The invention is based on the object of providing a telecommunications junction system comprising an overvoltage protection magazine, a junction block and, where necessary, a cable connector resulting in a modular junction system within which the individual components can be combined tailored to each application.

This object is achieved by the overvoltage protection magazine as it reads from claim 1.

The overvoltage protection magazine in accordance with the invention thus forms by means of the aspects as detailled in the following to a certain extent the basic components of a novel junction system leading to a modular configured junctioning technique. The overvoltage protection magazine in accordance with the invention is rack-mountable. It is to be noted in this respect that preference is given to the overvoltage protection magazine being rack-mountable in a telecommunications rack-mounting system in the form of troughs or two parallel sections, although it is just as feasible to rack-mount the overvoltage protection magazine in accordance with the invention by a cable connector which is in turn suitable for securing to a telecommunications rack-mounting system. In this case connecting the novel junction system to a rack-mounting system would be made via the cable connector. However, the overvoltage protection magazine in accordance with the invention remains the basic component of the junction system since it is combinable with a junction block and, where necessary, with a cable connector. It is understood that the overvoltage protection magazine in accordance with the invention does not necessarily need to be connected with a cable connector when the overvoltage protection magazine itself is rack-mountable, and in this application merely the connection to a junction block needs to be provided for connecting all lines. Accordingly, what is provided is a modularly configured junction system comprising the overvoltage protection magazine in accordance with the invention and a junction block.

Two aspects in accordance with the invention are provided for realizing the modular junction system, each of which ensuring by itself or in combination with each other advantageous compatibility of the individual components, this, on the one hand, providing a modular junction system by the overvoltage protection magazine in accordance with the invention comprising mounting means for rack-mounting the magazine complementary to the mounting means of the magazine serving to mount the junction block on the overvoltage protection magazine. This means that the mounting means of the overvoltage protection magazine for rack-mounting the same are identical to those provided on the junction block for its rack-mounting, the junction block thus, on the one hand, being rack-mountable by itself and, on the other, mountable on the overvoltage protection magazine acting as the basic element.

For this purpose, as indicated above, complementary mounting means are provided on the overvoltage protection magazine in accordance with the invention. This aspect as described enables the overvoltage protection magazine in accordance with the invention, as described above, to be rack-mounted as the basic component of the modular junction system. On the overvoltage protection magazine in accordance with the invention a junction block can be mounted to provide in all a junction means including overvoltage protection and, where necessary, overcurrent protection. As an alternative the junction block combinable with the overvoltage protection magazine in accordance with the invention may also be rack-mountable, however, without an overvoltage protection magazine being provided. Thus, the cited components can be put to use, depending on the requirements, both in combination and separately without any complicated adapter means being necessary.

This applies just the same to the aspect as described in the following as an alternative or supplement in which the interface of the overvoltage protection magazine in accordance with the invention serving to electrically connect the junction block is complementary to the interface of the magazine serving to electrically connect the cable connector. In other words, similar to the aspect as described above, the junction block combinable with the overvoltage protection magazine in accordance with the invention can be mounted not only on the overvoltage protection magazine but also on the cable connector. Since the interface between overvoltage protection magazine and junction block is complementary to that provided on the overvoltage protection magazine for electrically connecting the cable connector the overvoltage protection magazine can be eliminated and the junction block directly combined with the cable connector when the particular application so requires.

This aspect too, results in a junction system having a modular configured junction means being provided whose component is the overvoltage protection magazine in accordance with the invention, whereby the overvoltage protection magazine can be provided in combination with the junction block and, where necessary, the cable connector. As an alternative the modular configuration as described makes it possible for corresponding applications to connect the junction block directly to the cable connector to thus configure a junction means having no overvoltage protection.

Preferred further embodiments of the invention read from the further claims.

It is preferred that the mounting means of the overvoltage protections for rack-mounting the magazine are identical to those provided on a known junction block for its rack-mounting. In other words the overvoltage protection magazine in accordance with the invention comprises mounting means compatible with rack-mounting systems suitable for known junction blocks. This makes it possible not only to use known rack-mounting systems but also that no change needs to be made to the mounting means of the junction block to be combined with the overvoltage protection magazine in accordance with the invention. The mounting means provided on the overvoltage protection magazine for this purpose are namely, as described above, complementary to those serving to rack-mount the overvoltage protection magazine. In other words a known junction block in this embodiment can be mounted on the overvoltage protection magazine instead of a rack-mounting system to thus achieve a modular junction system with little complication in adapting the components employed.

It has furthermore proven to be good practice to provide the interface of the overvoltage protection magazine to the junction block at the front side of the overvoltage protection magazine and, where necessary, the interface of the overvoltage protection magazine to the cable connector at the rear side of the overvoltage protection magazine, this corresponding to the popular configuration of a junction means in which the terminated lines are accessible at the front side.

In accordance with yet a further aspect of the invention it relates to a telecommunications distribution point in which in addition to the overvoltage protection magazine in accordance with the invention a junction block and, where necessary, the cable connector combined with the two components are provided.

### Brief Description of the Drawings

The invention will now be detailled by way of an example embodiment as shown in the drawings in which:
- Fig. 1: is a diagrammatic plan view of the overvoltage protection magazine in accordance with the invention including a junction block attached thereto;
- Fig. 2: is a diagrammatic plan view of the overvoltage protection magazine in accordance with the invention including a junction block and cable connector attached thereto; and
- Fig. 3: is a diagrammatic plan view of the junction block and cable connector as shown in Fig. 2 in combination.

### Detailed Description of the Preferred Embodiment of the Invention

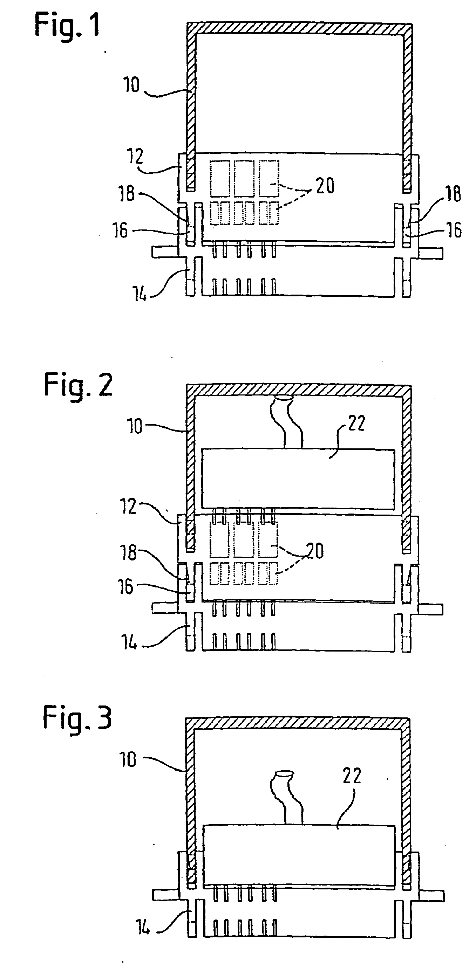

Referring now to Fig. 1 there is illustrated how the overvoltage protection magazine 12 in accordance with the invention is mounted on a popular telecommunications rack-mounting system 10. In this embodiment the rack-mounting system 10 is provided as a troughed rack-mounting systems it thus being U-shaped in the plan view as shown in Fig. 1. On the trough as shown the overvoltage protection magazine 12 in accordance with the invention is front-mounted, the legs of the rack-mounting system 10 mating in suitable shaped openings in the side edges of the overvoltage protection magazine 12 in the surroundings of which in the embodiment as shown additional latching elements are provided to latch the overvoltage protection magazine 12 to the rack-mounting system 10.

Evident in Fig. 1 is the aspect first cited in the description of the invention by which the mounting means of the overvoltage protection magazine 12 for rack-mounting the overvoltage protection magazine 12 on the rack-mounting system 10 are complementary to those via which mounting the junction block 14 evident in Fig. 1 of the overvoltage protection magazine 12 is made. In other words the overvoltage protection magazine 12 in accordance with the invention makes it possible by the legs 16 suitably shaped at its front side to mount the junction block 14 as is the case for the legs of the rack-mounting system 10. This is why the junction block 14, as shown in Fig. 1, is suitable for direct mounting not only on the overvoltage protection magazine 12 in accordance with the invention but also on the rack-mounting system 10 as detailled with reference to Fig. 3.

For this reason the mounting means of the junction block 14 are identical to those of the overvoltage protection magazine 12 with which the overvoltage protection magazine 12 is rack-mountable on the rack-mounting system 10. As indicated in Fig. 1 these mounting means of the junction block 14 consist of more particularly a side opening in each case for mating the legs 16 of the overvoltage protection magazine 12 and a latching means 18 configured in the form of a protuberance at the junction block 14. In the scope of the modular junction system thus provided either the overvoltage protection magazine 12 in accordance with the invention or the junction block 14 is rack-mountable on the rack-mounting system 10. When the overvoltage protection magazine 12, as preferably provided, also comprises mounting means for receiving already known junction blocks, then in addition the cited popular junction blocks or at least mounting means requiring no modification can be used. It is to be noted in addition that the protective components 20 as indicated in Fig. 1 are those serving to protect downstream components from overvoltage.

Referring now to Fig. 2 there is illustrated the arrangement as shown in Fig. 1 supplemented by a cable connector 22. As evident in the interface between overvoltage protection magazine 12 and junction block 14 in this case too, the aspect is provided as described above by which the mounting means of the overvoltage protection magazine 12 in accordance with the invention for configuring a modular junction system are designed in the way as described. The same as indicated in the scope of the description of the invention this may be combined with the aspect as described in the following as regards the electrical interfaces between cable connector and overvoltage protection, on the one hand, and between overvoltage protection magazine and junction block, on the other, as is shown in Fig. 2. However, as an alternative the configuration of the interfaces as described in the following may merely be provided in configuring a modular junction system.

Referring now to Fig. 2 there is illustrated how this consisting of the interface of the overvoltage protection magazine 12 in accordance with the invention serving to electrically connect the cable connector 22 is complementary to the interface of the overvoltage protection magazine 12 serving to electrically connect the junction block 14, meaning that the junction block 14 is mountable not only on the overvoltage protection magazine 12 in accordance with the invention to which it is electrically connected but also on a cable connector 22 which in turn can also be plugged into the overvoltage protection magazine 12 in accordance with the invention, usually from the rear. Due to the arrangement as shown in Fig. 2 a modular configured junction means is created which offers to advantage for the downstream components an overvoltage protection by the protective components 20. More particularly, the lines prefabricated in the cable connector 22 usually leading to the distribution point can be terminated in the overvoltage protection magazine 12 by particularly simple ways and means. However, the aspects as described also permit an another configuration of a modular junction means in which no overvoltage protection is provided.

Referring now to Fig. 3 there is illustrated how, as cited above, the interface of the overvoltage protection magazine 12 in accordance with the invention and the cable connector 22 is complementary to the interface to the junction block 14 to permit combining the cable connector 22 directly with the junction block 14 just as well when allowed for by the application. Thus, without having to modify the components involved a junction means adapted to the particular application is provided which is based on the modular junction system formed in accordance with the invention.

## Claims

1. A telecommunications overvoltage protection magazine (12)
- rack-mountable on a rack-mounting element (10) and
- combinable with a junction block (14) and, where necessary, a cable connector (22) for configuring a junction system, wherein
- the mounting means of said overvoltage protection magazine (12) serving to rack-mount said overvoltage protection magazine (12) on said rack-mounting element (10) are complementary to mounting means (16) of said overvoltage protection magazine serving to mount said junction block (14) on said overvoltage protection magazine (12), and/or
- the interface of said overvoltage protection magazine (12) serving to electrically connect said junction block (14) is complementary to the interface of said overvoltage protection magazine serving to electrically connect said cable connector (22).

2. The overvoltage protection magazine as set forth in claim 1, **characterized in that** said mounting means serving to rack-mount said overvoltage protection magazine (12) on said rack-mounting element (10) are identical to those provided on a known junction block (14) for its rack-mounting on said rack-mounting element (10).

3. The overvoltage protection magazine as set forth in claim 1 or 2, **characterized in that** said interface to said junction block (14) is provided at the front side and, where necessary, said interface to said cable connector (22) is provided at the rear side of said overvoltage protection magazine (12).

4. A telecommunications distribution point including at least one overvoltage protection magazine (12) as set forth in any of the preceding claims and at least one junction block (14) and where necessary at least one cable connector (22).

## Patentansprüche

1. Telekommunikationsüberspannungsschutzmagazin (12),
- das an einem Gestellrahmenelement (10) rahmenmontierbar ist, und
- das mit einem Verbindungsblock (14) und, wo erforderlich, mit einem Kabelverbinder (22) zum Konfigurieren eines Verbindungssystems kombinierbar ist, wobei
- die Montagemittel des Überspannungsschutzmagazins (12), die der Rahmenmontage des Überspannungsschutzmagazins (12) an dem Gestellrahmenelement (10) dienen, zu Montagemitteln (16) des Überspannungsschutzmagazins komplementär sind, die der Montage des Verbindungsblocks (14) an dem Überspannungsschutzmagazin (12) dienen, und/oder
- die Schnittstelle des Überspannungsschutzmagazins (12), die zur elektrischen Verbindung des Verbindungsblocks (14) dient, zu der Schnittstelle des Überspannungsschutzmagazins komplementär ist, die der elektrischen Verbindung des Kabelverbinders (22) dient.

2. Überspannungsschutzmagazin nach Anspruch 1,
**dadurch gekennzeichnet, dass** die Montagemittel, die der Rahmenmontage des Überspannungsschutzmagazins (12) an dem Gestellrahmenelement (10) dienen, mit jenen identisch sind, die an einem bekannten Verbindungsblock (14) für seine Rahmenmontage an dem Gestellrahmenelement (10) vorgesehen sind.

3. Überspannungsschutzmagazin nach Anspruch 1 oder 2, **dadurch gekennzeichnet, dass** die Schnittstelle mit dem Verbindungsblock (14) an der Vorderseite vorgesehen ist und, wo erforderlich, die Schnittstelle mit dem Kabelverbinder (22) an der Rückseite des Überspannungsschutzmagazins (12) vorgesehen ist.

4. Telekommunikationsverteilungsstelle, die mindestens ein Überspannungsschutzmagazin (12) nach einem der vorhergehenden Ansprüche und mindestens einen Verbindungsblock (14) und, wo erforderlich, mindestens einen Kabelverbinder (22) aufweist.

## Revendications

1. Magasin de protection contre les surtensions pour un système de télécommunications (12)
- pouvant être monté sur bâti sur un élément de montage sur bâti (10) et
- pouvant être combiné à un bloc de jonction (14) et, le cas échéant, à un connecteur de câble (22) pour configurer un système de jonction, dans lequel
- les moyens de montage dudit magasin de protection contre les surtensions (12) servant à monter sur bâti ledit magasin de protection contre les surtensions (12) sur ledit élément de montage sur bâti (10) sont complémentaires aux moyens de montage (16) dudit magasin de protection contre les surtensions servant à monter ledit bloc de jonction (14) sur ledit magasin de protection contre les surtensions (12), et/ou
- l'interface dudit magasin de protection contre les surtensions (12) servant à connecter électriquement ledit bloc de jonction (14) est complémentaire à l'interface dudit magasin de protection contre les surtensions servant à connecter électriquement ledit connecteur de câble (22).

2. Magasin de protection contre les surtensions selon la revendication 1, **caractérisé en ce que** lesdits moyens de montage servant à monter sur bâti ledit magasin de protection contre les surtensions (12) sur ledit élément de montage sur bâti (10) sont identiques à ceux prévus sur un bloc de jonction connu (14) pour son montage sur bâti sur ledit élément de montage sur bâti (10).

3. Magasin de protection contre les surtensions selon la revendication 1 ou 2, **caractérisé en ce que** ladite interface audit bloc de jonction (14) est prévue sur le côté avant et, le cas échéant, ladite interface audit connecteur de câble (22) est prévue sur le côté arrière dudit magasin de protection contre les surtensions (12).

4. Point de concentration de système de télécommunications comprenant au moins un magasin de protection contre les surtensions (12) selon l'une quelconque des revendications précédentes et au moins un bloc de jonction (14) et, le cas échéant, au moins un connecteur de câble (22).
